(19)

Europäisches Patentamt
European Patent Office
Office européen des brevets

(11) **EP 4 258 537 A1**

(12) **EUROPEAN PATENT APPLICATION**

(43) Date of publication:
**11.10.2023 Bulletin 2023/41**

(21) Application number: **22197599.8**

(22) Date of filing: **23.09.2022**

(51) International Patent Classification (IPC):
**H02P 25/08** (2016.01)  **H02K 1/24** (2006.01)
**H02K 3/16** (2006.01)  **H02K 9/12** (2006.01)
**H02K 21/04** (2006.01)  **H02K 19/12** (2006.01)

(52) Cooperative Patent Classification (CPC):
**H02P 25/08; H02K 1/14; H02K 11/33;
H02K 19/103; H02P 2207/05**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.04.2022 US 202263327158 P
31.05.2022 US 202217829236**

(71) Applicant: **QM Power Inc.
Kansas City, Missouri 64137 (US)**

(72) Inventors:
• **Essakiappan, Somasundaram
Kansas City, 64137 (US)**
• **Ionel, Dan M.
Lexington, 40506 (US)**
• **Kesgin, Murat Gurhan
Lexington,, 40506 (US)**
• **Manjrekar, Madhav
Kansas City, 64137 (US)**
• **Stepien, Thomas M.
Kansas City, 64137 (US)**

(74) Representative: **Finnegan Europe LLP
1 London Bridge
London SE1 9BG (GB)**

(54) **SYSTEMS, COMPONENTS, AND METHOD FOR PERMANENT MAGNET-FREE MOTOR AND ITS CONTROL**

(57) Systems, components, and methods for driving a motor are disclosed, comprising: a motor including: a rotor; and a stator including a plurality of stator phase coils and a plurality of electromagnets, the plurality of electromagnets being inter-dispersed with the plurality of stator phase coils; wherein the motor is configured to produce a first plurality of motor signals. A controller, coupled to the motor to receive the first plurality of motor signals, is configured to: produce a first plurality of control signals to a drive inverter and a DC-DC converter to affect at least one phase current delivered to at least one of the plurality of stator phase coils and an at least one excitation current delivered to at least one of the plurality of electromagnets.

FIG. 1A

FIG. 1B

**Description**

**PRIORITY CLAIM**

This application claims priority to U.S. Provisional Application No. 63/327,158, filed April 4, 2022, the disclosure of which is hereby incorporated by reference in its entirety.

**TECHNICAL FIELD**

The present disclosure generally relates to systems, components, and methods for permanent magnet-free motor design, construction, and control. Embodiments of the present disclosure are directed to inventive and unconventional systems related to traction applications for transportation and industrial applications.

**BACKGROUND**

Permanent Magnets ("PMs") are widely used in traction electric motors to replace field windings in the salient rotors, which produce static magnetic fields. Since PMs are compact compared to wound field coils, higher power densities have been achieved by using PMs, and copper losses in the field coils have been eliminated. However, PM motor technologies have several disadvantages. One problem is that field-weakening for high-speed control cannot be performed without sacrificing efficiency and risking demagnetization. PMs also produce fixed, unidirectional fields which cannot be manipulated to shape flux path. Additionally, PMs often use rare earth elements whose availability is severely limited to only a few countries, leading to high costs and availability risks. During fault conditions, motors which use PMs may produce uncontrollable open-circuit back-EMFs that risk power converters and safety, especially at high rotor speeds. Locating PMs on the rotor also has problems such as bonding issues in manufacturing and might limit the motor to lower permissible running speeds. Emerging stator-PM machines rely on excessive PMs to achieve high torque density, and torque improvement is constrained by saturation of magnetic core, and further torque density improvements by increasing stator current is not feasible.

Therefore, there is a need for improved systems, components, and methods for motor control. The present disclosure describes systems, components, and methods that overcome the shortcomings of rotor mounted PMs in traditional motor topologies by replacing them with stator mounted electromagnets. By adopting this architecture, dependency on critical rare earth elements is eliminated; fine regulation of flux-weakening via decreasing the field excitation current leads to a wide constant power range performance; inherent fault protection by disabling field excitation using power electronic field drive converters to collapse the back emf; and high-speed rotor operations are made possible by using a simple laminated steel rotor without any permanent magnets, resulting in power density improvements of up to four times over state-of-the-art technologies, translating into weight and cost reduction.

The disclosed systems, components, and methods for permanent magnet-free motor control are directed to overcoming one or more of the problems set forth above and/or other problems of the prior art.

**SUMMARY**

One aspect of the present disclosure may be directed to a system for driving a motor, the system comprising: a motor including: a rotor; and a stator including a plurality of stator phase coils and a plurality of electromagnets, the plurality of electromagnets being inter-dispersed with the plurality of stator phase coils, wherein the motor is configured to produce a first plurality of motor signals. In an embodiment, a controller, coupled to the motor to receive the first plurality of motor signals, may be configured to: produce a first plurality of control signals to a drive inverter and a DC-DC converter to affect at least one phase current delivered to at least one of the plurality of stator phase coils and an at least one excitation current delivered to at least one of the plurality of electromagnets.

Another aspect of the present disclosure is directed to a method for driving a motor, the method comprising: coupling a controller to a motor including: a rotor; and a stator including a plurality of stator phase coils and a plurality of electromagnets, the plurality of electromagnets being inter-dispersed with the plurality of stator phase coils. The method may include producing, with the motor, a first plurality of motor signals. The method may also include producing, with the controller, a first plurality of control signals to a drive inverter and a DC-DC converter to affect at least one phase current delivered to at least one of the plurality of stator phase coils and an at least one excitation current delivered to at least one of the plurality of electromagnets.

Yet another aspect of the present disclosure is directed to an n-phase electric motor comprising: a rotor; and a stator, the stator including: a plurality of stator phase coils and a plurality of electromagnets, the plurality of electromagnets being inter-dispersed with the plurality of stator phase coils. The plurality of electromagnets may be configured to produce a circumferential flux in a clockwise or counterclockwise direction based on a DC excitation current and the plurality of stator phase coils is configured to modulate the circumferential flux density.

Other systems, methods, and components are also discussed herein.

## BRIEF DESCRIPTION OF THE DRAWINGS

FIG. 1A illustrates a cross-section of an exemplary motor topology for magnet-free control, consistent with some embodiments of the present disclosure.

FIG. 1B illustrates an alternate view of an exemplary motor topology for magnet-free control, consistent with some embodiments of the present disclosure.

FIG. 2 illustrates circumferential fluxes associated with an exemplary magnet configuration, consistent with some embodiments of the present disclosure.

FIG. 3 illustrates an exemplary magnet configuration associated with a motor including a single stator dual rotor configuration, consistent with some embodiments of the present disclosure.

FIG. 4 illustrates an exemplary magnet configuration associated with a motor including a dual stator single rotor configuration, consistent with some embodiments of the present disclosure.

FIG. 5 illustrates an exemplary magnet configuration associated with a motor including a dual stator single rotor configuration, and both permanent magnets and electromagnets, consistent with some embodiments of the present disclosure.

FIG. 6 is a system diagram of an exemplary motor control system, consistent with some embodiments of the present disclosure.

## DETAILED DESCRIPTION

The following detailed description refers to the accompanying drawings. Wherever possible, the same reference numbers are used in the drawings and the following description to refer to the same or similar parts. While several illustrative embodiments are described herein, modifications, adaptations and other implementations are possible. For example, substitutions, additions, or modifications may be made to the components and steps illustrated in the drawings, and the illustrative methods described herein may be modified by substituting, reordering, removing, or adding steps to the disclosed methods. Accordingly, the following detailed description is not limited to the disclosed embodiments and examples. Instead, the proper scope of the invention is defined by the appended claims.

Prior known systems and methods for driving a motor involved using a permanent magnet on a rotor. Embodiments of the present disclosure are directed to systems, components, and methods configured to drive a motor by (1) relocating the magnets from rotor to stator, (2) simplifying rotor & stator construction with the use of modular cores and (2) partially or completely eliminating the use of permanent magnets (PM) by replacing them with electromagnets. For ease of discussion, an example system for driving a motor is described below with the understanding that aspects of the example system apply equally to methods and components.

Disclosed embodiments may include an n-phase electric motor comprising: a rotor; and a stator, the stator including: a plurality of stator phase coils and a plurality of electromagnets, the plurality of electromagnets being inter-dispersed with the plurality of stator phase coils; wherein the plurality of electromagnets is configured to produce a circumferential flux in a clockwise or counterclockwise direction based on a DC excitation current and the plurality of stator phase coils is configured to modulate the circumferential flux density.

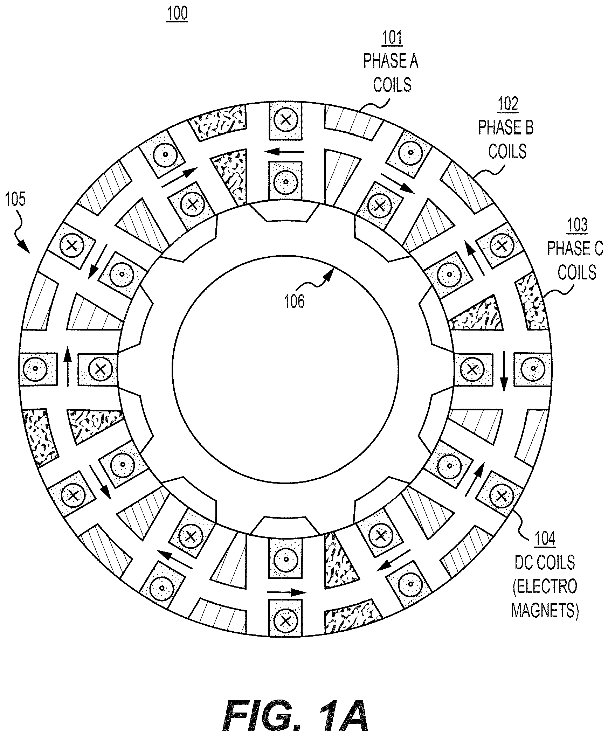

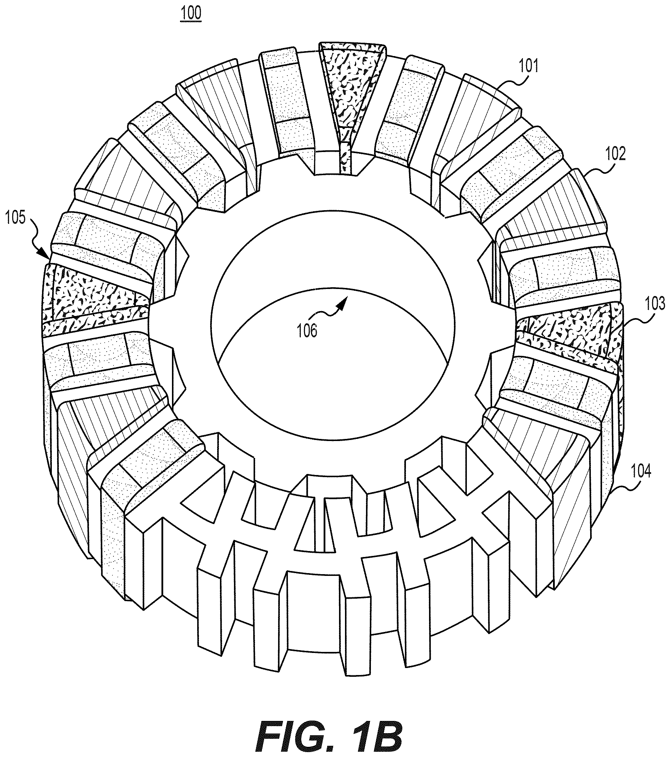

An n-phase electric motor may be a device that converts electrical energy into mechanical motion through the use of rotating magnetic fields. The motor may be of the radial flux type, or axial flux, or a hybrid combination of both. Motors of this topology may be driven by a combination of inverters for phase current control and DC-DC converters for field current control. FIG. 1A illustrates a cross-section of an exemplary motor topology for magnet-free control, consistent with some embodiments of the present disclosure. FIG. 1B illustrates an alternate view of an exemplary motor topology for magnet-free control, consistent with some embodiments of the present disclosure. As shown in FIGS. 1A and 1B, one example of an n-phase motor 100 includes a device containing three phase coils, such as phase A coils 101, phase B coils 102, and phase C coils 103. The motor may also include a plurality of electromagnets, such as electromagnet 104, inter-dispersed with a plurality of stator phase coils 101, 102, and 103 on the stator 105. The rotor 106 may be free of magnets.

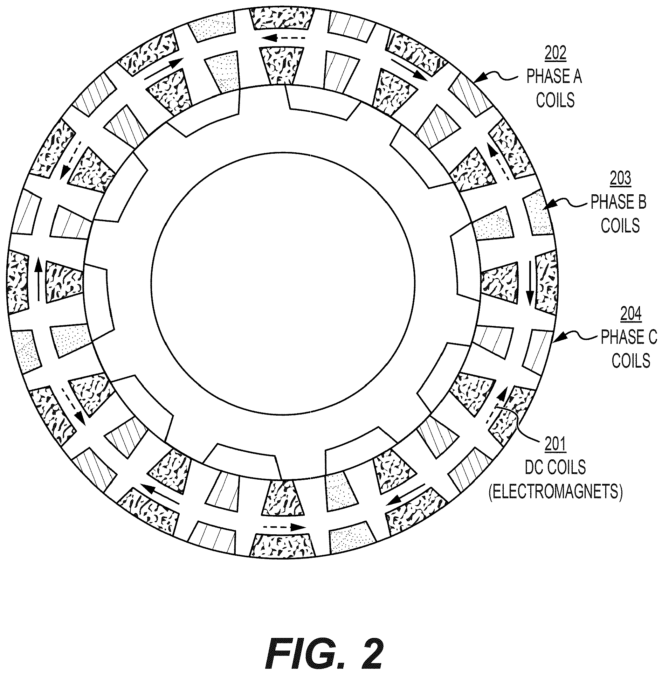

In some embodiments, the motor may include electromagnets placed inter-dispersed with stator phase coils of the n-phase motor, as shown in FIGS. 1A and 1B. FIG. 2 illustrates a circumferential flux associated with an exemplary magnet configuration, consistent with some embodiments of the present disclosure. As shown in FIG. 2, the DC excitation current for each of the electromagnets 201 may be selectively reversed by reversing the polarities of the individual field coil currents of the electromagnets 201 using field drive power converters to provide clockwise or counterclockwise circumferential flux as needed.

In the configuration shown in FIG. 2, alternating electromagnets are excited by regulating the field coil DC currents in such a way as to produce flux in clockwise and counterclockwise directions. The phase coil current, as it increases, sets up a field which interacts with the electromagnet flux and as a result, flux lines crossing the airgap increase and the airgap flux density increases. The airgap flux density can thus be modulated in amplitude and direction by closely regulating the electromagnet excitation currents via the DC-DC power converter, and the phase coil currents via an inverter. The three phase currents create rotating magnetic fields in the airgap, and hence an electromechanical torque is generated, spinning the rotor. Unlike other DC-field excited motor topologies which position the field coils in the rotor, the topology of the disclosed embodiments with its stator field coils does not need highly complicated field current delivery mechanisms such as brushes, slip rings, inductive wireless power transmitters, or capacitive wireless power transmitters.

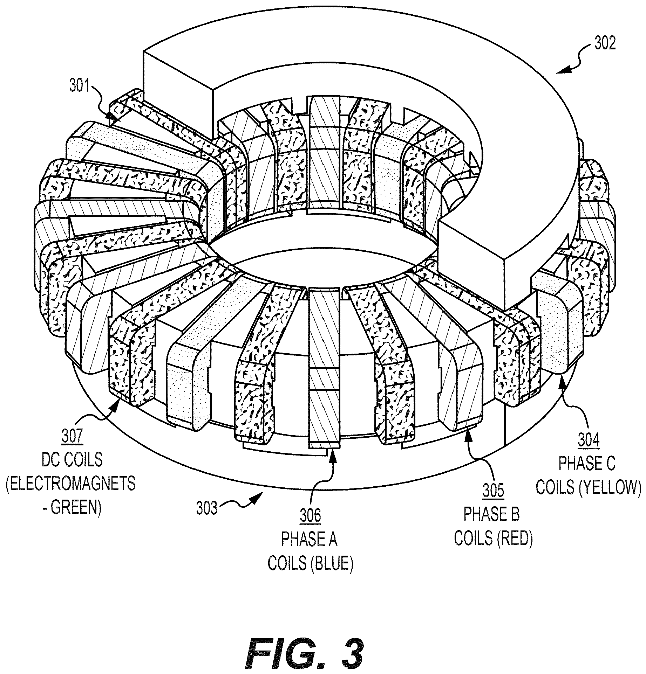

In the illustrated cross-section view of the motor in Fig. 1A, the cross section of the DC field coils (electromagnets) 104 is rectangular in shape. In other variations, the cross section of the DC field coils can be other shapes. A specific variation with a trapezoidal cross section is illustrated in FIG. 2, in which the cross section of the DC field coils (electromagnets) 201 is trapezoidal in shape. In some embodiments, the motor may be a radial flux motor, as shown in FIGs. 1 and 2. In other embodiments, the motor may be an axial flux motor, as shown in FIGs. 3-5.

The variations shown in FIGS. 1A, 1B, and 2 show all permanent magnets in the stator of the motor replaced with electromagnets or DC field coils. In other embodiments, a hybrid approach in which some of the permanent magnets are replaced with electromagnets or DC field coils, is also possible. In such embodiments, the permanent magnets are always present in the magnetic circuit to enable torque production by the motor. In such embodiments, when additional or enhanced output torque is required, the DC field coils can be energized by a DC-DC power converter to produce the necessary additional electromagnetic torque.

In some embodiments, the motor construction and operation may also be of the axial flux type. In the axial flux topology, several variations are possible, such as single stator and single rotor; single stator and dual rotor; and dual stator and dual rotor. In some embodiments, similar to the radial flux motor, a hybrid version in which some permanent magnets are replaced by electromagnets (DC field windings) may be realized in which the DC field coils are selectively energized for time-limited enhanced torque production.

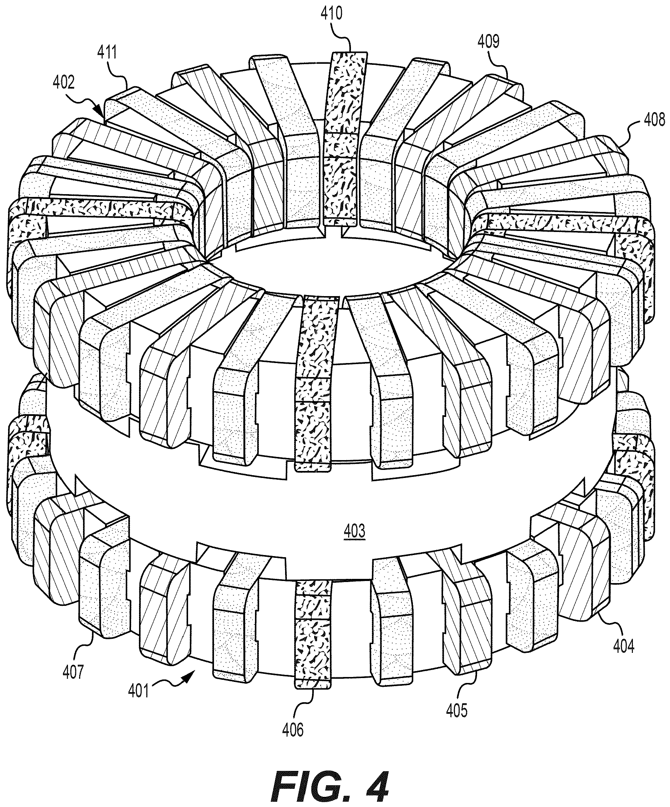

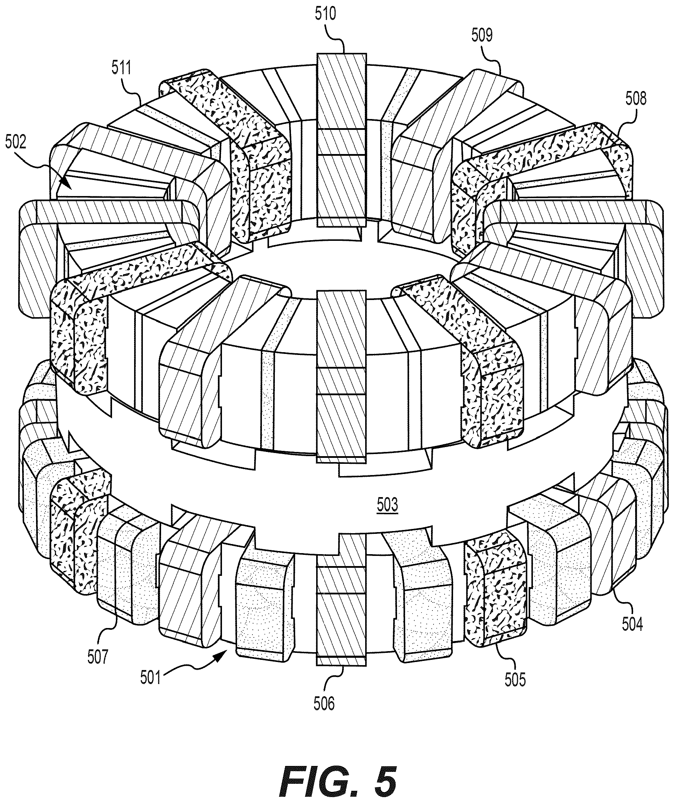

FIG. 3 illustrates an exemplary magnet configuration associated with a motor including a single stator dual rotor configuration, consistent with some embodiments of the present disclosure. As shown in FIG. 3, the motor may include a single stator 301 with two rotors 302 and 303. The stator 301 may include phase coils 304, 305, and 306, in addition to inter-dispersed electromagnets 307. FIG. 4 illustrates an exemplary magnet configuration associated with a motor including a dual stator single rotor configuration, consistent with some embodiments of the present disclosure. As shown in FIG. 4, the motor may include a two stators 401 and 402 with a single rotor 403. The first stator 401 may include phase coils 404, 405, and 406, in addition to inter-dispersed electromagnets 407. The second stator 402 may include phase coils 408, 409, and 410, in addition to inter-dispersed electromagnets 411. FIG. 5 illustrates an exemplary magnet configuration associated with a motor including both permanent magnets and electromagnets, consistent with some embodiments of the present disclosure. As shown in FIG. 5, the motor may include a two stators 501 and 502 with a single rotor 503. The first stator 501 may include phase coils 504, 505, and 506, in addition to inter-dispersed electromagnets 507. The second stator 502 may include phase coils 508, 509, and 510, in addition to inter-dispersed permanent magnets 511.

Disclosed embodiments may include a system for driving a motor, the system comprising: a motor including: a rotor; and a stator including a plurality of stator phase coils and a plurality of electromagnets, the plurality of electromagnets being inter-dispersed with the plurality of stator phase coils; wherein the motor is configured to produce a first plurality of motor signals; and a controller, coupled to the motor to receive the first plurality of motor signals, configured to: produce a first plurality of control signals to a drive inverter and a DC-DC converter to affect at least one phase current delivered to at least one of the plurality of stator phase coils and an at least one excitation current delivered to at least one of the plurality of electromagnets.

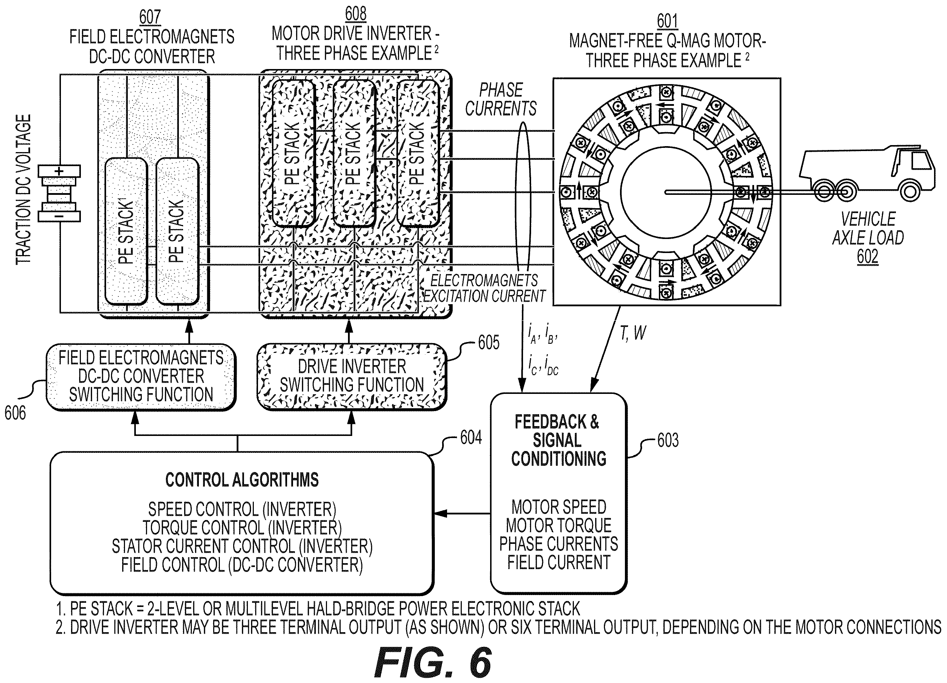

FIG. 6 is a system diagram of an exemplary motor control system, consistent with some embodiments of the present disclosure. As shown in FIG. 6, the system may include a motor 601, consistent with the embodiments disclosed herein. For example, the motor 601 may include a motor 100 of the radial flux type as disclosed in FIGS. 1A and 1B. In other embodiments, the motor 601 may include a motor of the axial flux type as disclosed in any of FIGs. 3-5. The motor 601 may be any type of motor disclosed herein, or may include any combination of the structures disclosed herein. the motor 601 may be used to power a vehicle 602. The motor 601 may produce a plurality of motor signals to a feedback and signal conditioning module 603 of a controller. The feedback and signal conditioning module 603 may process the plurality of motor signals to determine a plurality of values including motor speed, motor torque, phase currents, and field current. The feedback and signal conditioning module 603 may be connected to a plurality of control algorithm modules 604, configured to produce a plurality of control signals, including speed control, torque control, stator current control, and field control. The control algorithm module 604 may produce the plurality of control signals to generate a drive inverter switching function 605 and a DC-DC converter switching function 606. The drive inverter 608 and DC-DC converter 607 may produce phase currents and electromagnet excitation currents in order to modulate the function of motor 601.

The controller may include one or more processors as well as a memory medium(s) coupled to the processor(s) on which one or more computer programs or software components may be stored. As used herein, "processors" may include processor cores or processing chips. For example, a programmable controller with multiple processors may include a single processing chip with multiple cores (e.g., 2, 4, 8, etc.) or may include multiple processing chips (e.g., multiple central processing units), where each processing chip includes one or more processors. Multiple processors may refer to any combination of chips and cores. The memory medium may store one or more programs which are executable to perform the methods described herein. In some embodiments, the controller may include a microcontroller, or any other compact integrated circuit designed to govern a specific operation in an embedded system. The microcontroller may be programmable. In other embodiments, the controller may include a field-programmable gate array (FPGA), or any other semiconductor device that is based around a matrix of configurable logic blocks (CLBs) connected via programmable interconnects. The FPGA may be reprogrammed to application or functionality requirements corresponding to the functions disclosed herein after manufacturing.

As shown in FIG. 6, in some embodiments, in addition to a motor drive inverter 605 providing the motor phase currents, a separate DC-DC converter 606 for regulating the DC field current may also be included. The power electronic stacks (PE Stacks) shown in FIG. 6 may be constructed as 2-level output voltage stacks or multilevel output voltage stacks, depending on the DC voltage availability and the blocking voltage rating of the devices. Some example topologies for 2-level and 3-level PE Stacks are shown in FIG. 6. In some embodiments, the stacks may utilize power semiconductor devices such as MOSFETs or IGBTs.

In some embodiments, the controller may determine the phase currents and DC field current, based on speed and torque references, and measured speed and torque values. In PM machines, the generated electromagnetic torque is a function of the number of rotor poles, direct and quadrature inductances, stator current values, and permanent magnet flux. In such PM machines, an increase in commanded torque is realized only by increasing the magnitude of stator phase currents through the machine. However, in the embodiments disclosed herein, the generated electromagnetic torque may be a function of the number of rotor poles, direct and quadrature inductances, stator current values, and the DC field coil current., as shown in the following equation. The following equation provides an example of one implementation of a torque function. Other implementations may include additional variables or remove certain variables. Certain other implementations may include other non-idealities or nonlinearities, or remove certain non-idealities or nonlinearities.

$$ T_o = \frac{P_o}{\omega_m} = \frac{3}{2}P\left(i_d^e i_q^e \left(L_{dd}^e - L_{qq}^e\right) + \lambda_{dc} i_q^e\right) = \frac{3}{2}P\lambda_{dc} i_q^e $$

where $T_o$ is the output electromagnetic torque, $P_o$ is the output power, $\omega_m$ is the angular velocity, $P$ is the number of poles, $i_d^e$ and $i_q^e$ are direct and quadrature axis currents obtained through abc-dq transformation, $L_{dd}^e$ and $L_{qq}^e$ are direct and quadrature axis inductances, and $\lambda_{dc}$ is the flux linkage due to the current in the electromagnetic field windings.

In some embodiments, in addition to the stator current as a variable, the DC field coil current may also be available to regulate the torque. An increase in electromagnetic torque requirement may accomplished by regulating phase currents (using the multi-phase inverter) and DC field currents (using the field current DC-DC converter) in optimized proportions, resulting maximum operating efficiency. Locating the DC field coils in the stator may allow for high bandwidth control of the field flux, enabling fast and dynamic control of the machine's electromagnetic torque. In other motor architectures such as interior permanent magnet motors, replacing the PMs-in-the-rotor with electromagnets-in-the-rotor requires field delivery mechanisms like brushes, slip rings, inductive wireless power transmitters, or capacitive wireless power transmitters. The control bandwidth available in those implementations would be limited by the field delivery mechanisms and as such, would also limit the dynamic torque performance of the system.

When the motor enters the high speeds of the constant power region, field weakening may be used to minimize the back emf voltages at the terminals of the stator. In embodiments disclosed herein, this can be readily accomplished by modulating the DC field coil current via the DC-DC power converter. A PM machine relies only on injection of stator currents whose phase difference with the motor back emf varies with the operating speed. The embodiments disclosed herein, in addition to the stator current phase angle method, may also use the modulation of DC field coil current to weaken the field.

Disclosed embodiments may include a method for driving a motor, the method comprising: coupling a controller to a motor including: a rotor; and a stator including a plurality of stator phase coils and a plurality of electromagnets, the plurality of electromagnets being inter-dispersed with the plurality of stator phase coils; producing, with the motor, a first plurality of motor signals; and producing, with the controller, a first plurality of control signals to a drive inverter and a DC-DC converter to affect at least one phase current delivered to at least one of the plurality of stator phase coils and an at least one excitation current delivered to at least one of the plurality of electromagnets.

While the present disclosure has been shown and described with reference to particular embodiments thereof, it will be understood that the present disclosure can be practiced, without modification, in other environments. The foregoing description has been presented for purposes of illustration. It is not exhaustive and is not limited to the precise forms or embodiments disclosed. Other embodiments may include radial flux motors with dual (inner and outer) rotors, axial flux motors with one stator and one rotor, stacked axial flux motors with multiple stators and multiple rotors connected together. Modifications and adaptations will be apparent to those skilled in the art from consideration of the specification and practice of the disclosed embodiments.

Computer programs based on the written description and disclosed methods are within the skill of an experienced developer. Various programs or program modules can be created using any of the techniques known to one skilled in the art or can be designed in connection with existing software. For example, program sections or program modules can be designed in or by means of .Net Framework, .Net Compact Framework (and related languages, such as Visual Basic, C, etc.), Java, C++, Objective-C, HTML, HTML/AJAX combinations, XML, or HTML with included Java applets. Program sections or program modules may also be designed in or by means of Integrated Design Environments prescribed or provided by commercially available microcontroller, processor, or field programmable gate array manufacturers.

Moreover, while illustrative embodiments have been described herein, the scope of any and all embodiments having equivalent elements, modifications, omissions, combinations (e.g., of aspects across various embodiments), adaptations and/or alterations as would be appreciated by those skilled in the art based on the present disclosure. The limitations in the claims are to be interpreted broadly based on the language employed in the claims and not limited to examples described in the present specification or during the prosecution of the application. The examples are to be construed as non-exclusive. Furthermore, the steps of the disclosed methods may be modified in any manner, including by reordering steps and/or inserting or deleting steps. It is intended, therefore, that the specification and examples be considered as illustrative only, with a true scope and spirit being indicated by the following claims and their full scope of equivalents.

Further features of the disclosure are outlined in the following clauses.

1. A system for driving a motor, the system comprising:
a motor including:

a rotor; and
a stator including a plurality of stator phase coils and a plurality of electromagnets, the plurality of electromagnets being inter-dispersed with the plurality of stator phase coils;
wherein the motor is configured to produce a first plurality of motor signals; and
a controller, coupled to the motor to receive the first plurality of motor signals, configured to:
produce a first plurality of control signals to a drive inverter and a DC-DC converter to affect at least one phase current delivered to at least one of the plurality of stator phase coils and an at least one excitation current delivered to at least one of the plurality of electromagnets.

2. The system of clause 1, wherein the first plurality of motor signals includes at least one of motor speed, motor torque, phase current, and field current.

3. The system of clause 1, wherein the first plurality of control signals includes at least one of speed control, torque control, stator current control, and field control.

4. The system of clause 1, wherein the system further comprises at least one field drive power converter to produce the at least one excitation current.

5. The system of clause 4, wherein the at least one field drive power converter is configured to produce the at least one excitation current by reversing current polarities of the plurality of stator phase coils.

6. The system of clause 1, wherein the at least one excitation current is configured to produce flux in a clockwise direction.

7. The system of clause 1, wherein the at least one excitation current is configured to produce flux in a counterclockwise direction.

8. The system of clause 1, wherein the motor is free of permanent magnets.

9. The system of clause 1, wherein the motor further comprises at least one permanent magnet.

10. The system of clause 1, wherein the motor is an n-phase electric motor.

11. The system of clause 1, wherein the motor construction is of an axial flux type.

12. The system of clause 1, wherein the motor construction is of a radial flux type.

13. The system of clause 1, wherein the motor construction is of a combination of an axial flux type and a radial flux type.

14. The system of clause 1, wherein the system further comprises a plurality of power electronics stacks configured to provide power to the motor.

15. A method for driving a motor, the method comprising:

coupling a controller to a motor including:

a rotor; and

a stator including a plurality of stator phase coils and a plurality of electromagnets, the plurality of electromagnets being inter-dispersed with the plurality of stator phase coils;

producing, with the motor, a first plurality of motor signals; and

producing, with the controller, a first plurality of control signals to a drive inverter and a DC-DC converter to affect at least one phase current delivered to at least one of the plurality of stator phase coils and an at least one excitation current delivered to at least one of the plurality of electromagnets.

16. The method of clause 15, wherein the first plurality of motor signals includes at least one of motor speed, motor torque, phase current, and field current.

17. The method of clause 15, wherein the first plurality of control signals includes at least one of speed control, torque control, stator current control, and field control.

18. The method of clause 15, wherein the method further comprises producing flux in a clockwise direction using the at least one excitation current.

19. The method of clause 15, wherein the method further comprises producing flux in a counterclockwise direction using the at least one excitation current.

20. An n-phase electric motor comprising:

a rotor; and

a stator comprising a plurality of stator phase coils and a plurality of electromagnets, the plurality of electromagnets being inter-dispersed with the plurality of stator phase coils,

wherein the plurality of electromagnets is configured to produce a circumferential flux in a clockwise or counterclockwise direction based on a DC excitation current and the plurality of stator phase coils is configured to modulate a density of the circumferential flux.

**Claims**

1. A system for driving a motor, the system comprising:

a motor including:

a rotor; and
a stator including a plurality of stator phase coils and a plurality of electromagnets, the plurality of electromagnets being inter-dispersed with the plurality of stator phase coils;
wherein the motor is configured to produce a first plurality of motor signals; and
a controller, coupled to the motor to receive the first plurality of motor signals, configured to:
produce a first plurality of control signals to a drive inverter and a DC-DC converter to affect at least one phase current delivered to at least one of the plurality of stator phase coils and an at least one excitation current delivered to at least one of the plurality of electromagnets.

2. The system of claim 1, wherein the first plurality of motor signals includes at least one of motor speed, motor torque, phase current, and field current.

3. The system of claim 1 or 2, wherein the first plurality of control signals includes at least one of speed control, torque control, stator current control, and field control.

4. The system of any preceding claim, wherein the system further comprises at least one field drive power converter to produce the at least one excitation current.

5. The system of claim 4, wherein the at least one field drive power converter is configured to produce the at least one excitation current by reversing current polarities of the plurality of stator phase coils.

6. The system of any preceding claim, wherein the at least one excitation current is configured to produce flux in a clockwise direction.

7. The system of any one of claims 1 to 5, wherein the at least one excitation current is configured to produce flux in a counterclockwise direction.

8. The system of any preceding claim, wherein the motor is free of permanent magnets.

9. The system of any one of claims 1 to 7, wherein the motor further comprises at least one permanent magnet.

10. The system of any preceding claim, wherein the motor is an n-phase electric motor.

11. The system of any preceding claim, wherein the motor construction is of an axial flux type.

12. The system of any preceding claim, wherein the motor construction is of a radial flux type.

13. The system of any preceding claim, wherein the motor construction is of a combination of an axial flux type and a radial flux type.

14. The system of any preceding claim, wherein the system further comprises a plurality of power electronics stacks configured to provide power to the motor.

15. A method for driving a motor, the method comprising:

    coupling a controller to a motor including:

        a rotor; and
        a stator including a plurality of stator phase coils and a plurality of electromagnets, the plurality of electromagnets being inter-dispersed with the plurality of stator phase coils;

    producing, with the motor, a first plurality of motor signals; and
    producing, with the controller, a first plurality of control signals to a drive inverter and a DC-DC converter to affect at least one phase current delivered to at least one of the plurality of stator phase coils and an at least one excitation current delivered to at least one of the plurality of electromagnets.

16. The method of claim 15, wherein the first plurality of motor signals includes at least one of motor speed, motor torque, phase current, and field current.

17. The method of claim 15 or 16, wherein the first plurality of control signals includes at least one of speed control, torque control, stator current control, and field control.

18. The method of any one of claims 15 to 17, wherein the method further comprises producing flux in a clockwise direction using the at least one excitation current.

19. The method of any one of claims 15 to 17, wherein the method further comprises producing flux in a counterclockwise direction using the at least one excitation current.

20. An n-phase electric motor comprising:

    a rotor; and
    a stator comprising a plurality of stator phase coils and a plurality of electromagnets, the plurality of electromagnets being inter-dispersed with the plurality of stator phase coils,

wherein the plurality of electromagnets is configured to produce a circumferential flux in a clockwise or counterclockwise direction based on a DC excitation current and the plurality of stator phase coils is configured to modulate a density of the circumferential flux.

**FIG. 1A**

FIG. 1B

202
PHASE A
COILS

203
PHASE B
COILS

204
PHASE C
COILS

201
DC COILS
(ELECTROMAGNETS)

# FIG. 2

301

302

307
DC COILS
(ELECTROMAGNETS
- GREEN)

303

306
PHASE A
COILS (BLUE)

305
PHASE B
COILS (RED)

304
PHASE C
COILS (YELLOW)

**FIG. 3**

**FIG. 4**

**FIG. 5**

607
FIELD ELECTROMAGNETS
DC-DC CONVERTER

608
MOTOR DRIVE INVERTER -
THREE PHASE EXAMPLE [2]

601
MAGNET-FREE Q-MAG MOTOR-
THREE PHASE EXAMPLE [2]

TRACTION DC VOLTAGE

PE STACK [1]

PE STACK

PE STACK

PE STACK

PE STACK

PHASE
CURRENTS

ELECTROMAGNETS
EXCITATION CURRENT

VEHICLE
AXLE LOAD
602

FIELD ELECTROMAGNETS
DC-DC CONVERTER
SWITCHING FUNCTION

DRIVE INVERTER
SWITCHING FUNCTION

605

606

604

603

$i_A$, $i_B$,
$i_C$, $i_{DC}$

T, W

FEEDBACK &
SIGNAL
CONDITIONING

MOTOR SPEED
MOTOR TORQUE
PHASE CURRENTS
FIELD CURRENT

CONTROL ALGORITHMS

SPEED CONTROL (INVERTER)
TORQUE CONTROL (INVERTER)
STATOR CURRENT CONTROL (INVERTER)
FIELD CONTROL (DC-DC CONVERTER)

1. PE STACK = 2-LEVEL OR MULTILEVEL HALD-BRIDGE POWER ELECTRONIC STACK
2. DRIVE INVERTER MAY BE THREE TERMINAL OUTPUT (AS SHOWN) OR SIX TERMINAL OUTPUT, DEPENDING ON THE MOTOR CONNECTIONS

*FIG. 6*

EP 4 258 537 A1

Europäisches
Patentamt

European
Patent Office

Office européen
des brevets

**EUROPEAN SEARCH REPORT**

Application Number

**EP 22 19 7599**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 972 802 A (LEI SHEN) 21 July 2017 (2017-07-21) | 1,4-8, 10,14, 15,18-20 | INV. H02P25/08 H02K1/24 |
| Y | * paragraph [0021] – paragraph [0050]; figures 1-6 * | 2,3,9, 11-13, 16,17 | H02K3/16 H02K9/12 H02K21/04 H02K19/12 |
| Y | CN 105 790 456 A (UNIV NANJING AERONAUTICS & ASTRONAUTICS) 20 July 2016 (2016-07-20) * paragraph [0023]; figures 1-3 * | 9 | |
| Y | BOLDEA ION ET AL: "Reluctance Synchronous and Flux-Modulation Machines Designs: Recent Progress", IEEE JOURNAL OF EMERGING AND SELECTED TOPICS IN POWER ELECTRONICS, IEEE, PISCATAWAY, NJ, USA, vol. 10, no. 2, 6 December 2021 (2021-12-06), pages 1683-1702, XP011904835, ISSN: 2168-6777, DOI: 10.1109/JESTPE.2021.3133129 [retrieved on 2021-12-06] * Chapter VI and VII; figures 11, 14 * | 2,3, 11-13, 16,17 | |

TECHNICAL FIELDS
SEARCHED (IPC)

H02P
H02K

The present search report has been drawn up for all claims

| Place of search | Date of completion of the search | Examiner |
|---|---|---|
| Munich | 11 May 2023 | Roussel, Maxime |

EPO FORM 1503 03.82 (P04C01)

**ANNEX TO THE EUROPEAN SEARCH REPORT
ON EUROPEAN PATENT APPLICATION NO.**

**EP 22 19 7599**

This annex lists the patent family members relating to the patent documents cited in the above-mentioned European search report.
The members are as contained in the European Patent Office EDP file on
The European Patent Office is in no way liable for these particulars which are merely given for the purpose of information.

**11-05-2023**

| Patent document cited in search report | Publication date | Patent family member(s) | Publication date |
|---|---|---|---|
| CN 106972802 A | 21-07-2017 | NONE | |
| CN 105790456 A | 20-07-2016 | NONE | |

EPO FORM P0459

For more details about this annex : see Official Journal of the European Patent Office, No. 12/82

**EP 4 258 537 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63327158